# EUROPEAN PATENT APPLICATION

(11) **EP 4 691 871 A1**
(43) Date of publication of application: **11.02.2026**
(21) Application number: 24780135.0
(22) Date of filing: 25.03.2024
(51) Int. Cl.: B60W 30/06

(54) **PARKING ASSISTANCE SYSTEM**

(30) Priority: 31.03.2023 JP 2023058241
(71) Applicant: AISIN CORPORATION, Kariya-shi, Aichi 448-8650 (JP)
(72) Inventor: SATO Wataru, Kariya-shi, Aichi 448-8650 (JP); MIZUTANI Yuichi, Kariya-shi, Aichi 448-8650 (JP); ISHIKAWA Kota, Kariya-shi, Aichi 448-8650 (JP)
(74) Representative: TBK
(86) International application number: PCT/JP2024/011603
(87) International publication number: WO 2024/204017

(57) **Abstract**

A parking assistance system includes a vehicle control unit, a wheel stop position estimation unit, and an error amount estimation unit. The vehicle control unit sets a contact assumption area (A) based on an estimated wheel stop position (Pc) estimated by the wheel stop position estimation unit, and performs pre-stop control for causing a vehicle to travel at a contact preparation speed in the contact assumption area (A). The vehicle control unit reduces the contact assumption area (A) as an estimated error amount estimated by the error amount estimation unit decreases.

## Description

### Technical Field

The present disclosure relates to a parking assistance system that performs vehicle control for moving a vehicle to a parking space.

### Background Art

JP 2022-72962A (Reference 1) discloses a parking assistance system that controls a driving force and a braking force acting on wheels to perform vehicle control for moving a vehicle to a parking space. The parking assistance system in Reference 1 sets a movement path for moving the vehicle to the parking space, reduces a speed of the vehicle in a stepwise manner according to a remaining distance to a target position, and stops the vehicle as parking completion when the vehicle reaches the target position or a wheel comes into contact with a wheel stop.

In the parking assistance system in Reference 1, the speed is reduced from a time when the vehicle starts entering the parking space, and then the speed is further reduced from a time when a steering angle becomes zero. Accordingly, it is possible to prevent the vehicle from forcefully reaching the wheel stop.

### Citation List

### Patent Literature

PTL 1: JP 2022-72962A

### Summary of Invention

### Technical Problem

However, depending on a parking scenario, there may be a situation in which the steering angle becomes zero from a considerably early stage. In such a case, when the speed of the vehicle is greatly reduced from a time when the steering angle is zero, a distance and a time for traveling at an extremely low vehicle speed may become long, and convenience may be lowered.

Therefore, it is desirable to provide a parking assistance system capable of appropriately moving a vehicle to a parking space while ensuring convenience.

### Solution to Problem

A parking assistance system according to the present disclosure is a parking assistance system that includes a vehicle control unit configured to control a driving force and a braking force acting on a wheel to perform vehicle control for moving a vehicle including the wheel to a parking space, the parking assistance system further including:
a wheel stop position estimation unit configured to estimate a position of a wheel stop in the parking space; and
an error amount estimation unit configured to estimate an error amount of a position recognition system of the vehicle, in which
the vehicle control unit sets, based on an estimated wheel stop position which is the position of the wheel stop estimated by the wheel stop position estimation unit, a contact assumption area, which is an area where the wheel is allowed to come into contact with the wheel stop, on a side of the vehicle relative to the estimated wheel stop position, and performs pre-stop control for causing the vehicle to travel at a preset contact preparation speed in the contact assumption area, and
the vehicle control unit reduces the contact assumption area as an estimated error amount, which is the error amount estimated by the error amount estimation unit, decreases.

According to this configuration, it is possible to cause the vehicle to travel at the contact preparation speed and easily prevent the vehicle from forcefully reaching the wheel stop by performing the pre-stop control within the contact assumption area set based on the estimated wheel stop position. At this time, it is possible to avoid an unnecessarily long distance over which the vehicle travels at a low vehicle speed by reducing the contact assumption area as the estimated error amount of the vehicle position recognition system of the vehicle decreases. Therefore, it is possible to provide a parking assistance system capable of appropriately moving a vehicle to a parking space while ensuring convenience.

More features and advantages of the technique according to the disclosure will become clearer by the following description of exemplary and non-limiting embodiments with reference to the drawings.

### Brief Description of Drawings

FIG. 1 is a view illustrating an example of parking assistance;
FIG. 2 is a schematic block diagram illustrating an example of a system configuration of a vehicle including a parking assistance system;
FIG. 3 is a functional block diagram illustrating the parking assistance system;
FIG. 4 is a schematic view illustrating a method of setting a contact assumption area;
FIG. 5 is a graph illustrating a vehicle speed change according to a position of the vehicle during the parking assistance;
FIG. 6 is a graph illustrating a driving force change according to the position of the vehicle during the parking assistance;
FIG. 7 is a schematic view illustrating an example of setting a size of the contact assumption area;
FIG. 8 is a schematic view illustrating an example of setting the size of the contact assumption area;
FIG. 9 is a schematic view illustrating an example of setting the size of the contact assumption area;
FIG. 10 is a schematic view illustrating an example of setting the size of the contact assumption area; and
FIG. 11 is a schematic view illustrating an example of setting the size of the contact assumption area.

### Description of Embodiments

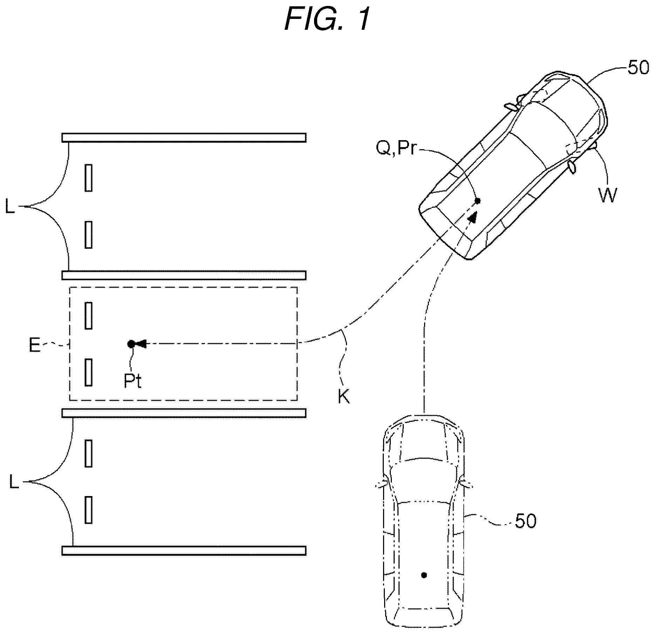

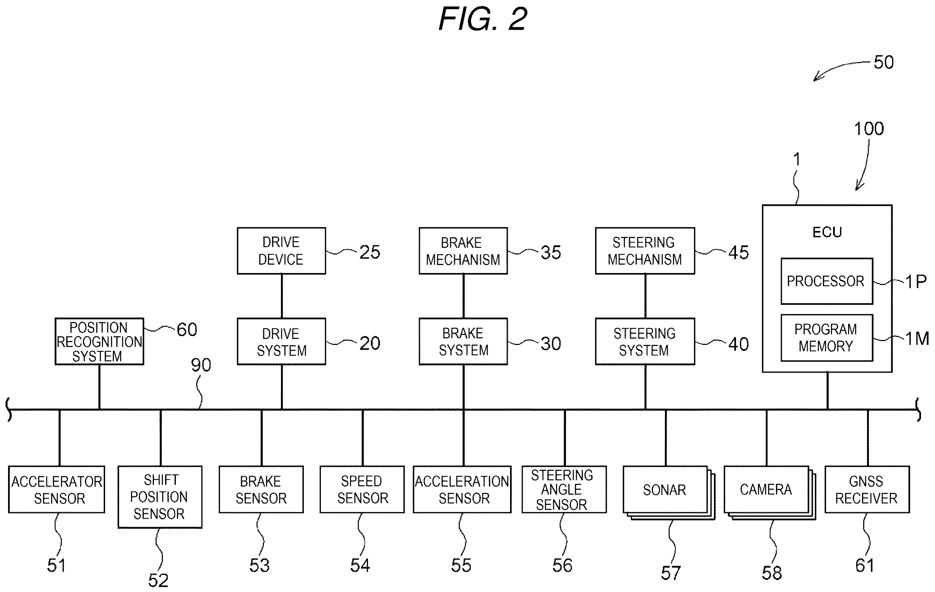

An embodiment of a parking assistance system will be described with reference to the drawings. A view in FIG. 1 illustrates a mode of parking assistance when a vehicle 50 is parked. A block diagram in FIG. 2 schematically illustrates an example of a system configuration of the vehicle 50 including a parking assistance system 100. The parking assistance system 100 according to the present embodiment performs vehicle control for moving the vehicle 50 to a parking space E by controlling a driving force and a braking force acting on wheels W and controlling a steering angle.

In the present embodiment, the parking assistance system 100 causes the vehicle 50 to be parked in the parking space E by automated driving. Steering may be manually performed by a driver based on guidance provided by the parking assistance system 100, and only driving and braking may be performed by the automated driving, that is, semi-automated driving may be performed.

As illustrated in FIG. 2, the parking assistance system 100 is implemented by cooperation with other systems and various sensors using an electronic control unit (ECU) 1 as a core. The ECU 1 includes a microcomputer, a microprocessor, a processor 1P such as a digital signal processor (DSP), a program memory 1M for storing software such as programs and parameters, and other various electronic components.

The processor 1P is hardware serving as a core of the ECU 1, and a vehicle control unit is implemented by cooperation between various types of hardware having the processor 1P as a core and software such as a program stored in the program memory 1M. The parking assistance system 100 is implemented by cooperation among the ECU 1, other systems such as a drive system 20, a brake system 30, a steering system 40, and a position recognition system 60, and various sensors and peripheral devices indicated by reference numerals 51 to 58 and 61, with the ECU 1 serving as a core.

Although various functional units constituting the parking assistance system 100 will be described below, each functional unit may be implemented by a plurality of pieces of hardware or may be implemented by cooperation between at least one piece of hardware and software, and is not necessarily configured as an independent component.

As illustrated in FIG. 1, the parking assistance system 100 moves the vehicle 50 to a target parking position Pt and stops the vehicle 50 based on the target parking position Pt set in the parking space E and a current position Pr of the vehicle 50. The target parking position Pt and the current position Pr correspond to coordinates in a coordinate system (parking assistance coordinate system) when the parking assistance system 100 performs the parking assistance (vehicle control).

A reference sign "Q" illustrated in FIG. 1 indicates a reference point in the vehicle 50 when a position of the vehicle 50 is specified. The current position Pr corresponds to coordinates at which the reference point Q is located in the parking assistance coordinate system. The target parking position Pt indicates coordinates at which the reference point Q of the vehicle 50 is located when the vehicle 50 is appropriately located in the parking space E. The parking assistance system 100 calculates a movement trajectory of the reference point Q when the vehicle 50 moves from the current position Pr to the target parking position Pt based on the current position Pr and the target parking position Pt, and sets the movement trajectory as a movement path K.

The parking assistance system 100 performs vehicle control such that the reference point Q moves along the movement path K from the current position Pr. When the reference point Q reaches the target parking position Pt, that is, when the current position Pr coincides with the target parking position Pt, the parking assistance system 100 stops the vehicle 50 because the vehicle 50 is appropriately located in the parking space E. The target parking position Pt may be an estimated wheel stop position Pc to be described later, and the reference point Q may be a position of a rear wheel axle.

FIG. 1 illustrates a so-called garage parking. For example, the driver stops the vehicle 50 in a state where the vehicle 50 passes over the parking space E, the driver turns a steering wheel in a direction opposite to the parking space E to slightly turn the vehicle 50. This position can be referred to as a reverse start position where the vehicle 50 starts to reverse toward the parking space E. Although a steering amount required for moving the vehicle 50 to the target parking position Pt is large, the vehicle 50 may be stopped in a state of traveling straight without turning the steering wheel in this manner. Before starting the movement from a stop position to the target parking position Pt, a direction of a steered wheel may be changed by so-called stationary steering in cooperation with the steering system 40.

Needless to say, the parking assistance system 100 according to the present embodiment may be applied to not only the garage parking but also so-called parallel parking.

When the driver moves the vehicle 50 forward, it is preferable that the parking assistance system 100 guides the driver about a traveling direction and the stop position (reverse start position). For example, it is preferable that the driver is guided by display on a display in a vehicle cabin or voice guidance, and the driver operates an accelerator pedal, a brake pedal, the steering wheel, and the like (not illustrated) to move the vehicle 50 to the reverse start position.

When the vehicle 50 reaches the reverse start position, the parking assistance system 100 may notify the driver that the automated driving including automated steering can be achieved. When the driver gives an instruction to start vehicle control by, for example, touching a start button provided on a touch panel or the like of the display in the vehicle cabin, a driving operation of the vehicle 50 including steering is handed over to the parking assistance system 100. Thereafter, the parking assistance system 100 moves the vehicle 50 to the target parking position Pt by the automated driving.

As illustrated in FIG. 2, the vehicle 50 includes the drive system 20, the brake system 30, the steering system 40, and the position recognition system 60 in addition to the ECU 1 that is the core of the parking assistance system 100. The drive system 20 is a system that controls a drive device 25 for driving the wheels W. The drive device 25 includes, for example, an internal combustion engine, a rotary electric machine, a gear mechanism, an engagement device that connects and disconnects power transmission between rotary members, which are not illustrated. The brake system 30 is a system that generates the braking force on the wheels W. The steering system 40 is a system that changes the traveling direction of the vehicle 50 by moving the steered wheels among the wheels W. The position recognition system 60 is a system that recognizes the position (current position Pr) of the vehicle 50.

The vehicle 50 includes various sensors and peripheral devices such as an accelerator sensor 51, a shift position sensor 52, a brake sensor 53, a speed sensor 54, an acceleration sensor 55, a steering angle sensor 56, a sonar 57, a camera 58, and a global navigation satellite system (GNSS) receiver 61. An example of the GNSS receiver 61 includes a global positioning system (GPS) receiver.

The accelerator sensor 51 is a sensor that detects an operation amount of the accelerator pedal operated by the driver. The shift position sensor 52 is a sensor that detects an instruction input for giving an instruction of an operation mode of the drive device 25, such as a gear stage (including reverse, parking, and the like) instructed by a shift lever (not illustrated). The brake sensor 53 is a sensor that detects an operation amount of the brake pedal operated by the driver. The speed sensor 54 is a sensor that detects a traveling speed of the vehicle 50, that is, a rotation speed of the wheels W. The acceleration sensor 55 is a sensor that detects an acceleration of the vehicle 50, and the acceleration sensor 55 according to the present embodiment can also detect, for example, an inclination angle and an inclination direction to the ground where the vehicle 50 is located. The steering angle sensor 56 is a sensor that detects an operation amount of the steering wheel operated by the driver, and preferably detects the operation amount as a steering angle of the vehicle 50.

The sonars 57 are installed at a plurality of locations of the vehicle 50 and detects the presence or absence of an obstacle present around the vehicle 50. The sonar 57 is preferably an active sonar. In addition to the sonar 57, a laser radar or the like may be provided as an obstacle sensor. The cameras 58 are installed at a plurality of locations of the vehicle 50 and acquire images of the surrounding of the vehicle 50. The GNSS receiver 61 receives signals from GNSS satellites.

The sensors and the peripheral devices indicated by reference numerals "51" to "58" and "61" including the ECU 1 (parking assistance system 100), the drive system 20, the brake system 30, the steering system 40, and the position recognition system 60 described above are communicably connected to one another via an in-vehicle network 90 such as a controller area network (CAN).

For example, the drive system 20 controls the drive device 25 in cooperation with the accelerator sensor 51, the shift position sensor 52, the brake sensor 53, the speed sensor 54, the acceleration sensor 55, the steering angle sensor 56, and the like via the in-vehicle network 90. The brake system 30 controls a brake mechanism 35 in cooperation with the brake sensor 53 via the in-vehicle network 90. The steering system 40 controls a steering mechanism 45 including the steering wheel and the steered wheels in cooperation with the steering angle sensor 56. The position recognition system 60 recognizes the position (current position Pr) of the vehicle 50 based on the GNSS signal received by the GNSS receiver 61.

In the present embodiment, the position recognition system 60 recognizes the position (current position Pr) of the vehicle 50 based on information obtained from the speed sensor 54, the steering angle sensor 56, and the camera 58, and the like in addition to the GNSS signal.

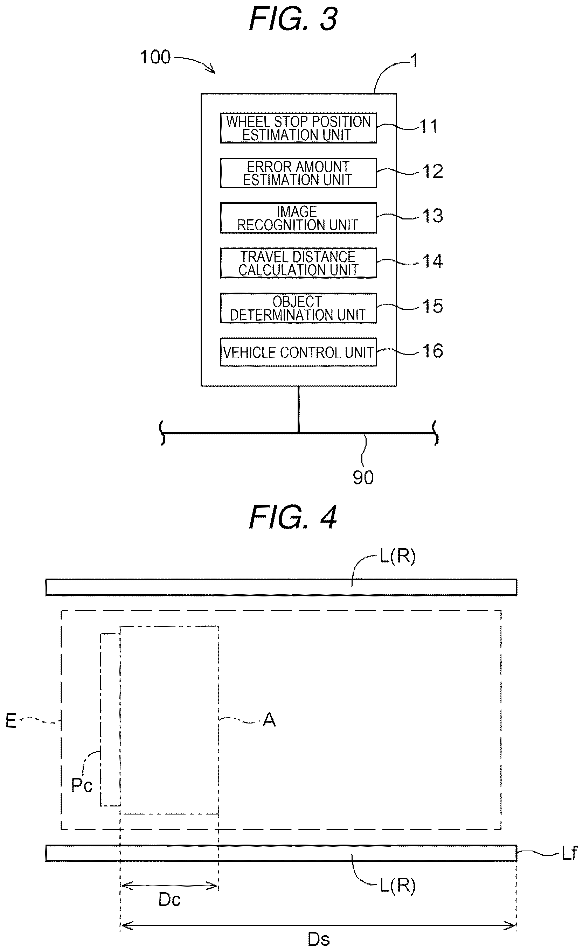

As illustrated in FIG. 3, the parking assistance system 100 (ECU 1) includes a wheel stop position estimation unit 11, an error amount estimation unit 12, an image recognition unit 13, a travel distance calculation unit 14, an object determination unit 15, and a vehicle control unit 16. In each of these functional units, a calculation unit for performing various kinds of processing on input data is implemented by hardware, software (program), or both of hardware and software. A form illustrated in FIG. 3 is an exemplary and conceptual block diagram and does not limit a physical configuration of the actual ECU 1.

The wheel stop position estimation unit 11 estimates a position of a wheel stop in the parking space E. The error amount estimation unit 12 estimates an error amount of the position recognition system 60 of the vehicle 50. The image recognition unit 13 performs image recognition on an image acquired by imaging the surrounding of the vehicle 50. The travel distance calculation unit 14 calculates a travel distance of the vehicle 50. The object determination unit 15 determines a positional relationship between a recognition object R and the vehicle 50 based on a result of the image recognition performed by the image recognition unit 13. The vehicle control unit 16 controls the driving force and the braking force acting on the wheels W to perform vehicle control for moving the vehicle 50 including the wheels W to the parking space E.

The wheel stop position estimation unit 11 estimates the position of the wheel stop in the parking space E. The wheel stop position estimation unit 11 estimates the position of the wheel stop assumed to be installed in the parking space E where the vehicle 50 is to be parked by the parking assistance. In the present embodiment, the wheel stop position estimation unit 11 estimates the position of the wheel stop based on, for example, another object present in the vicinity of the parking space E, instead of directly recognizing the wheel stop and specifying the position of the wheel stop. Here, examples of the another object present in the vicinity of the parking space E include a fixed object such as a parking frame line L that partitions the parking space E as illustrated in FIG. 4. The wheel stop position estimation unit 11 assumes that a wheel stop is present and estimates a position of the wheel stop regardless of whether a wheel stop is actually present in the parking space E.

For example, with reference to a position of a front end Lf of the parking frame line L recognized by the image recognition unit 13, the wheel stop position estimation unit 11 estimates, as the position of the wheel stop, a position rearward of the position of the front end Lf by a reference set distance Ds. In the present embodiment, the position of the wheel stop estimated by the wheel stop position estimation unit 11 is referred to as the "estimated wheel stop position Pc". Here, the reference set distance Ds can be set to, for example, a length obtained by adding an average wheelbase and an average front overhang of the general vehicle 50.

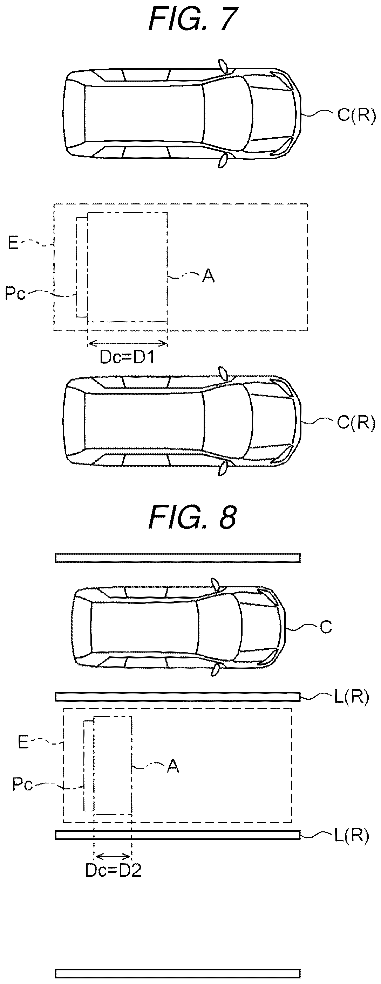

The estimated wheel stop position Pc may be obtained using a moving object (see FIG. 7) such as an adjacent vehicle C, which is another vehicle 50 present in the adjacent parking space E, as the another object present in the vicinity of the parking space E. In this case, for example, the wheel stop position estimation unit 11 sets, as the estimated wheel stop position Pc, a position that is rearward of a position of a front end of the adjacent vehicle C by the reference set distance Ds with reference to the position of the front end of the adjacent vehicle C recognized by the image recognition unit 13.

A basic operation of the vehicle control unit 16 related to the parking assistance of the present embodiment will be described with reference to FIGS. 4 to 6. As illustrated in FIG. 4, based on the estimated wheel stop position Pc obtained by the wheel stop position estimation unit 11, the vehicle control unit 16 sets a contact assumption area A, which is an area where the wheel W may come into contact with the wheel stop, on a side (front side) of the vehicle 50 relative to the estimated wheel stop position Pc. In the present embodiment, the vehicle control unit 16 sets, as the contact assumption area A, an area between the estimated wheel stop position Pc and a position ahead of the estimated wheel stop position Pc by a predetermined contact assumption distance Dc.

In this manner, the vehicle control unit 16 performs calculation processing of calculating a size of the contact assumption area A based on the recognition object R (the parking frame line L, the adjacent vehicle C, or the like) recognized by the image recognition unit 13 and a predefined positional relationship between the recognition object R and the wheel stop (a positional relationship determined according to the reference set distance Ds and the contact assumption distance Dc with reference to the position of the front end).

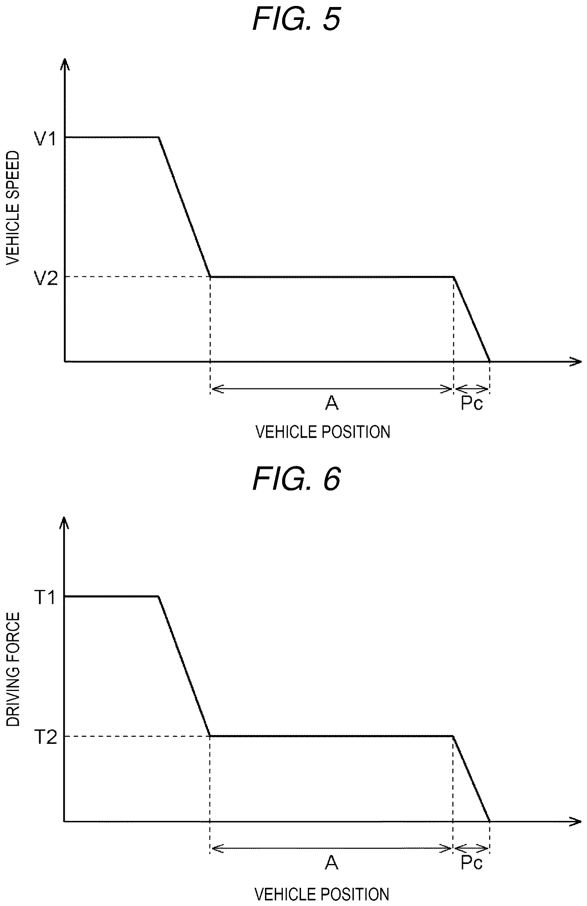

As illustrated in FIG. 5, the vehicle control unit 16 causes the vehicle 50 to travel at a preset assistance limit speed V1 during execution of the parking assistance. In FIG. 5, a horizontal axis indicates the position of the vehicle 50, and an origin corresponds to a start position of the parking assistance. The assistance limit speed V1 is set to a speed at which the vehicle 50 can be safely moved into the parking space E. The assistance limit speed V1 can be set to, for example, about 1 km/h to 4 km/h.

When the vehicle 50 for which the parking assistance is executing enters the contact assumption area A, the vehicle control unit 16 performs pre-stop control. The entry of the vehicle 50 into the contact assumption area A can be determined based on a matter that a distance between the reference point Q (for example, the position of the rear wheel axle) of the vehicle 50 obtained from the position recognition system 60 and the estimated wheel stop position Pc is equal to or less than the contact assumption distance Dc. Here, the pre-stop control is a control that is preliminarily executed in preparation for stopping the vehicle 50 before the wheel W of the vehicle 50 comes into contact with the wheel stop. In the pre-stop control, the vehicle control unit 16 causes the vehicle 50 to travel at a preset contact preparation speed V2 that is set to a value lower than the assistance limit speed V1. The contact preparation speed V2 is set to a speed at which an occupant does not feel uncomfortable with a shock when the wheel W comes into contact with the wheel stop. The contact preparation speed V2 can be set to, for example, about 0 km/h to 1 km/h.

As illustrated in FIG. 6, the vehicle control unit 16 controls the drive system 20 to drive the vehicle 50 with a preset assistance limit driving force T1 during execution of the parking assistance. In FIG. 6, a horizontal axis indicates the position of the vehicle 50, and an origin corresponds to the start position of the parking assistance which is the same as that in FIG. 5. The assistance limit driving force T1 is set to a driving force that can appropriately move the vehicle 50 into the parking space E and prevents the wheel W from riding over the wheel stop when the wheel W comes into contact with the wheel stop.

In the pre-stop control executed after the vehicle 50 enters the contact assumption area A, the vehicle control unit 16 controls the drive system 20 to drive the vehicle 50 with a preset contact preparation driving force T2 that is set to a value lower than the assistance limit driving force T1. The contact preparation driving force T2 is set to a driving force that can stop the vehicle 50 without shock when the wheel W comes into contact with the wheel stop.

The parking assistance system 100 (ECU 1) according to the present embodiment is characterized in that the size of the contact assumption area A can be variably set according to a situation. Hereinafter, this point will be described with reference to FIGS. 7 to 10.

As described above, the contact assumption area A is set based on the estimated wheel stop position Pc obtained by the wheel stop position estimation unit 11, and the estimated wheel stop position Pc is obtained based on the recognition object R (the parking frame line L, the adjacent vehicle C, etc.) recognized by the image recognition unit 13. The estimated wheel stop position Pc serving as a reference for setting the contact assumption area A is estimated to have a difference in reliability between a case where the estimated wheel stop position Pc is obtained based on a fixed object such as the parking frame line L and a case where the estimated wheel stop position Pc is obtained based on a moving object such as the adjacent vehicle C. In a case where the estimated wheel stop position Pc is obtained based on a fixed object such as the parking frame line L, it is estimated that a more reliable estimated wheel stop position Pc is obtained than a case where the estimated wheel stop position Pc is obtained based on a moving object such as the adjacent vehicle C.

Therefore, in the present embodiment, when the recognized recognition object R is a fixed object such as the parking frame line L, the vehicle control unit 16 reduces the contact assumption area A as compared with a case where the recognized recognition object R is a moving object such as the adjacent vehicle C. FIG. 7 illustrates an example of the contact assumption area A set when the recognized recognition object R is the adjacent vehicle C. In FIG. 7, the contact assumption area A is set to an area between the estimated wheel stop position Pc and a position ahead of the estimated wheel stop position Pc by a first distance D1. On the other hand, FIG. 8 illustrates an example of the contact assumption area A set when the recognized recognition object R is the parking frame line L. In FIG. 8, the contact assumption area A is set to an area between the estimated wheel stop position Pc and a position ahead of the estimated wheel stop position Pc by a second distance D2 that is shorter than the first distance D1.

Information on the position (current position Pr) of the vehicle 50 acquired by the position recognition system 60 is not necessarily accurate and includes a certain error. An error amount is not uniform for all the vehicles 50, and may vary depending on a manufacturer, a vehicle type, a grade, and the like. Naturally, the smaller the error amount is, the more accurate information on the position (current position Pr) of the vehicle 50 is.

Therefore, in the present embodiment, the error amount estimation unit 12 estimates the error amount of the position recognition system 60 of the vehicle 50, and the vehicle control unit 16 reduces the contact assumption area A as an estimated error amount, which is the error amount estimated by the error amount estimation unit 12, decreases. As described above, in the present embodiment, the information on the position (current position Pr) of the vehicle 50 is obtained based on the GNSS signal and the information obtained from the speed sensor 54, the steering angle sensor 56, and the camera 58. Among these, an error of the GNSS signal is basically uniform in all the vehicles 50 as long as a type of GNSS is the same, whereas the information obtained from the speed sensor 54, the steering angle sensor 56, and the camera 58, and a determination result based on the information may be different for each vehicle 50.

For example, the image recognition unit 13 performs the image recognition on an image acquired by imaging the surrounding of the vehicle 50 with the camera 58, but the image recognition may include an error. The travel distance calculation unit 14 calculates a travel distance of the vehicle 50 for which the parking assistance is being executed based on the information obtained from the speed sensor 54, but the calculated travel distance may also include an error due to a detection error of the speed sensor 54. The object determination unit 15 determines the positional relationship between the recognition object R and the vehicle 50 based on a result of the image recognition by the image recognition unit 13, but an error may be included in a determination result related to the positional relationship between the recognition object R and the vehicle 50 due to the error included in the image recognition as described above. In consideration of such circumstances, the error amount estimation unit 12 according to the present embodiment calculates the estimated error amount by integrating the errors of the image recognition unit 13, the travel distance calculation unit 14, and the object determination unit 15.

The vehicle control unit 16 adjusts the size of the contact assumption area A based on a result of the calculation processing described with reference to FIG. 4 related to the setting of the contact assumption area A (an area ahead of the estimated wheel stop position Pc by the contact assumption distance Dc) so that the size of the contact assumption area A is obtained in consideration of the estimated error amount. The adjustment of the size of the contact assumption area A in consideration of the estimated error amount may be performed in a stepwise manner for each section after the estimated error amount is divided into a plurality of sections, or may be performed linearly based on a predetermined relational expression. In either case, the vehicle control unit 16 reduces the contact assumption area A as the estimated error amount calculated by the error amount estimation unit 12 decreases.

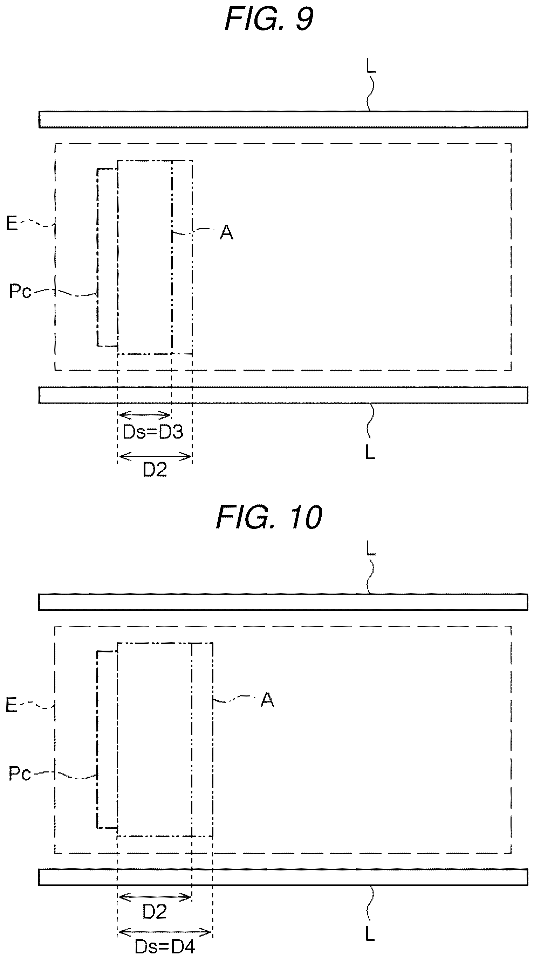

FIG. 9 illustrates an example of the adjusted contact assumption area A when the estimated error amount calculated by the error amount estimation unit 12 is relatively small in a case where the recognized recognition object R is the parking frame line L. In FIG. 9, the contact assumption area A is set to an area between the estimated wheel stop position Pc and a position ahead of the estimated wheel stop position Pc by a third distance D3 that is shorter than the second distance D2. On the other hand, FIG. 10 illustrates an example of the adjusted contact assumption area A when the estimated error amount calculated by the error amount estimation unit 12 is relatively large in a case where the recognized recognition object R is the parking frame line L. In FIG. 10, the contact assumption area A is set to an area between the estimated wheel stop position Pc and a position ahead of the estimated wheel stop position Pc by a fourth distance D4 that is longer than the second distance D2.

Although FIGS. 9 and 10 illustrate examples in which the recognized recognition object R is the parking frame line L, when the recognized recognition object R is the adjacent vehicle C, the vehicle control unit 16 reduces the contact assumption area A as the estimated error amount decreases in a similar manner. In this case, when the estimated error amount is relatively small, the contact assumption area A is set to an area between the estimated wheel stop position Pc and a position ahead of the estimated wheel stop position Pc by a fifth distance that is shorter than the first distance D1. On the other hand, when the estimated error amount is relatively large, the contact assumption area A is set to an area between the estimated wheel stop position Pc and a position ahead of the estimated wheel stop position Pc by a sixth distance that is longer than the first distance D1.

As described above, the parking assistance system 100 according to the present embodiment is the parking assistance system 100 that includes the vehicle control unit 16 configured to control a driving force and a braking force acting on the wheels W to perform vehicle control for moving the vehicle 50 including the wheels W to the parking space E, the parking assistance system 100 further including:
the wheel stop position estimation unit 11 configured to estimate a position of the wheel stop in the parking space E; and
the error amount estimation unit 12 configured to estimate an error amount of the position recognition system 60 of the vehicle 50, in which
the vehicle control unit 16 sets, based on the estimated wheel stop position Pc which is the position of the wheel stop estimated by the wheel stop position estimation unit 11, the contact assumption area A, which is an area where the wheel W may come into contact with the wheel stop, on a side of the vehicle 50 relative to the estimated wheel stop position Pc, and performs pre-stop control for causing the vehicle 50 to travel at the preset contact preparation speed V2 in the contact assumption area A, and
the vehicle control unit 16 reduces the contact assumption area A as an estimated error amount, which is the error amount estimated by the error amount estimation unit 12, decreases.

According to this configuration, it is possible to cause the vehicle 50 to travel at the contact preparation speed V2 and easily prevent the vehicle 50 from forcefully reaching the wheel stop by performing the pre-stop control within the contact assumption area A set based on the estimated wheel stop position Pc. At this time, it is possible to avoid an unnecessarily long distance over which the vehicle 50 travels at a low vehicle speed by reducing the contact assumption area A as the estimated error amount of the vehicle position recognition system 60 of the vehicle 50 decreases. Therefore, it is possible to provide the parking assistance system 100 capable of appropriately moving the vehicle 50 to the parking space E while ensuring convenience.

According to one aspect,
the parking assistance system 100 preferably further includes the image recognition unit 13 configured to perform image recognition on an image acquired by imaging the surrounding of the vehicle 50, in which
the vehicle control unit 16 preferably performs calculation processing of calculating a size of the area where the wheel W may come into contact with the wheel stop based on the recognition object R recognized by the image recognition unit 13 and a predetermined positional relationship between the recognition object R and the wheel stop, and
the vehicle control unit 16 preferably sets a size of the contact assumption area A based on a size obtained by adding a result of the calculation processing and the estimated error amount.

According to this configuration, it is possible to appropriately set the size of the contact assumption area A based on the result of the calculation processing related to the size of the area where the wheel W may come into contact with the wheel stop and the estimated error amount.

According to one aspect,
the parking assistance system 100 preferably further includes the image recognition unit 13 configured to perform image recognition on an image acquired by imaging the surrounding of the vehicle 50,
the travel distance calculation unit 14 configured to calculate a travel distance of the vehicle 50, and
the object determination unit 15 configured to determine a positional relationship between the recognition object R and the vehicle 50 based on a result of the image recognition performed by the image recognition unit 13, in which
the error amount estimation unit 12 preferably calculates the estimated error amount by integrating errors of the image recognition unit 13, the travel distance calculation unit 14, and the object determination unit 15.

According to this configuration, it is possible to accurately calculate the estimated error amount in consideration of an error of a recognition system related to the image recognition and travel distance calculation and an error of a determination system related to determination of the positional relationship between the recognition object R and the vehicle 50. Therefore, the size of the contact assumption area A can be appropriately set.

According to one aspect,
the vehicle control unit 16 preferably limits the driving force acting on the wheels W to the preset contact preparation driving force T2 or less in the contact assumption area A.

According to this configuration, when the wheel W comes into contact with the wheel stop, the wheel W can be easily stopped without riding on the wheel stop.

### (Other Embodiments)

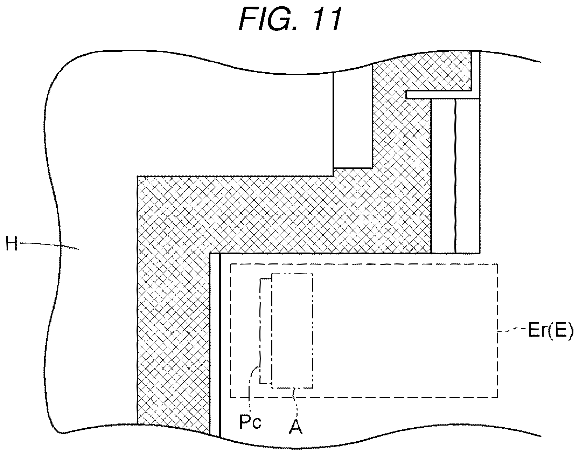

(1) In the above embodiment, a configuration in which the wheel stop position estimation unit 11 estimates the position of the wheel stop based on another object present in the vicinity of the parking space E was described as an example. However, the present disclosure is not limited to such a configuration, and for example, the wheel stop position estimation unit 11 may detect the wheel stop by a laser radar or the like and then estimate the position of the wheel stop as an estimated position including an error.
(2) In the above embodiment, a configuration in which the contact assumption area A is set as a two-dimensional area having a constant length in a path direction and a constant length in a width direction was mainly assumed and described. However, the present disclosure is not limited to such a configuration, and the contact assumption area A may be a one-dimensional area defined only by a constant length in the path direction.
(3) In the above embodiment, a configuration in which the recognition object R serving as a reference for obtaining the estimated wheel stop position Pc is the parking frame line L or the adjacent vehicle C was described as an example. However, the present disclosure is not limited to such a configuration, and other objects such as a wall, a fence, and a flap plate of coin parking may be set as the recognition object R as long as the object is assumed to be present in the vicinity of the wheel stop in the parking space E and can be recognized by the image recognition unit 13.
(4) In the above embodiment, a configuration in which the vehicle control unit 16 adjusts the size of the contact assumption area A according to whether the recognition object R is a fixed object or a moving object and according to the estimated error amount obtained by the error amount estimation unit 12 was described as an example. However, the present disclosure is not limited to such a configuration, and the vehicle control unit 16 may adjust the size of the contact assumption area A according to only the estimated error amount obtained by the error amount estimation unit 12. The vehicle control unit 16 may adjust the size of the contact assumption area A based on other criteria on the premise that the size of the contact assumption area A is adjusted according to the estimated error amount. For example, as illustrated in FIG. 11, when the parking space E in which the vehicle 50 is to be parked is a registered parking space Er registered in the parking assistance system 100, such as a garage at a home H, the contact assumption area A may be adjusted to be small.
(5) In the above embodiment, a configuration in which the vehicle control unit 16 reduces the contact assumption area A when the estimated error amount obtained by the error amount estimation unit 12 is relatively small, and increases the contact assumption area A when the estimated error amount is relatively large was described as an example. However, the present disclosure is not limited to such a configuration, and the vehicle control unit 16 may only reduce the contact assumption area A when the estimated error amount obtained by the error amount estimation unit 12 is relatively small.
(6) In the above embodiment, a configuration in which the vehicle control unit 16 limits the vehicle speed to the contact preparation speed V2 and limits the driving force to the contact preparation driving force T2 in the pre-stop control performed when the vehicle 50 enters the contact assumption area A was described as an example. However, the present disclosure is not limited to such a configuration, and the vehicle control unit 16 may limit at least the vehicle speed to the contact preparation speed V2, and a driving force limitation is not essential in the pre-stop control. Vehicle speed control and driving force control during the pre-stop control may be performed by feedforward control or feedback control.
(7) In the above embodiment, a configuration in which the vehicle control unit 16 decelerates the vehicle 50 in advance so that the vehicle speed has already been reduced to be equal to or lower than the contact preparation speed V2 at the time when the vehicle 50 reaches the contact assumption area A was mainly assumed and described. However, the present disclosure is not limited to such a configuration, and the vehicle control unit 16 may start decelerating the vehicle 50 after the vehicle 50 reaches the contact assumption area A. The driving force limitation can be considered in a similar manner.
(8) The configurations disclosed in the above-described embodiments (including the above-described embodiments and other embodiments; the same applies hereinafter) can be applied in combination with configurations disclosed in other embodiments as long as no contradiction occurs. In regard to other configurations, the embodiments disclosed in the present specification are illustrative in all respects, and can be appropriately modified without departing from the gist of the present disclosure.

### Summary of Embodiments

In summary, the parking assistance system according to the present disclosure preferably includes the following configurations.

The parking assistance system (100) includes the vehicle control unit (16) configured to control a driving force and a braking force acting on the wheel (W) to perform vehicle control for moving the vehicle (50) including the wheel (W) to the parking space (E), the parking assistance system (100) further including:
the wheel stop position estimation unit (11) configured to estimate a position of a wheel stop in the parking space (E); and
the error amount estimation unit (12) configured to estimate an error amount of the position recognition system (60) of the vehicle (50), in which
based on the estimated wheel stop position (Pc) which is the position of the wheel stop estimated by the wheel stop position estimation unit (11), the vehicle control unit (16) sets the contact assumption area (A), which is an area where the wheel (W) may come into contact with the wheel stop, on a side of the vehicle (50) relative to the estimated wheel stop position (Pc), and performs pre-stop control for causing the vehicle (50) to travel at the preset contact preparation speed (V2) in the contact assumption area (A), and
the vehicle control unit (16) reduces the contact assumption area (A) as an estimated error amount, which is the error amount estimated by the error amount estimation unit (12), decreases.

According to this configuration, it is possible to cause the vehicle (50) to travel at the contact preparation speed (V2) and easily prevent the vehicle (50) from forcefully reaching the wheel stop by performing the pre-stop control within the contact assumption area (A) set based on the estimated wheel stop position (Pc). At this time, it is possible to avoid an unnecessarily long distance over which the vehicle (50) travels at a low vehicle speed by reducing the contact assumption area (A) as the estimated error amount of the vehicle position recognition system (60) of the vehicle (50) decreases. Therefore, it is possible to provide the parking assistance system (100) capable of appropriately moving the vehicle (50) to the parking space (E) while ensuring convenience.

According to one aspect,
the parking assistance system (100) preferably further includes the image recognition unit (13) configured to perform image recognition on an image acquired by imaging the surrounding of the vehicle (50), in which
the vehicle control unit (16) preferably performs calculation processing of calculating a size of the area where the wheel (W) may come into contact with the wheel stop based on the recognition object (R) recognized by the image recognition unit (13) and a predetermined positional relationship between the recognition object (R) and the wheel stop, and
the vehicle control unit (16) preferably sets a size of the contact assumption area (A) based on a size obtained by combining a result of the calculation processing and the estimated error amount.

According to this configuration, it is possible to appropriately set the size of the contact assumption area (A) based on the result of the calculation processing related to the size of the area where the wheel W may come into contact with the wheel stop and the estimated error amount.

According to one aspect,
the parking assistance system (100) preferably further includes the image recognition unit (13) configured to perform image recognition on an image acquired by imaging the surrounding of the vehicle (50),
the travel distance calculation unit (14) configured to calculate a travel distance of the vehicle (50), and
the object determination unit (15) configured to determine a positional relationship between the recognition object (R) and the vehicle (50) based on a result of the image recognition performed by the image recognition unit (13), in which
the error amount estimation unit (12) preferably calculates the estimated error amount by integrating errors of the image recognition unit (13), the travel distance calculation unit (14), and the object determination unit (15).

According to this configuration, it is possible to accurately calculate the estimated error amount in consideration of an error of a recognition system related to the image recognition and travel distance calculation and an error of a determination system related to determination of the positional relationship between the recognition object (R) and the vehicle (50). Therefore, a size of the contact assumption area (A) can be appropriately set.

According to one aspect,
the vehicle control unit (16) preferably limits the driving force acting on the wheel (W) to the preset contact preparation driving force (T2) or less in the contact assumption area (A).

According to this configuration, when the wheel (W) comes into contact with the wheel stop, the wheel (W) can be easily stopped without riding on the wheel stop.

The parking assistance system (100) according to the present disclosure may obtain at least one of the above-described effects.

### Reference Signs List

1: ECU
1M: program memory
1P: processor
11: wheel stop position estimation unit
12: error amount estimation unit
13: image recognition unit
14: travel distance calculation unit
15: object determination unit
16: vehicle control unit
20: drive system
25: drive device
30: brake system
35: brake mechanism
40: steering system
45: steering mechanism
50: vehicle
51: accelerator sensor
52: shift position sensor
53: brake sensor
54: speed sensor
55: acceleration sensor
56: steering angle sensor
57: sonar
58: camera
60: position recognition system
61: GNSS receiver
90: in-vehicle network
100: parking assistance system
A: contact assumption area
C: adjacent vehicle
D1: first distance
D2: second distance
D3: third distance
D4: fourth distance
Dc: contact assumption distance
Ds: reference set distance
E: parking space
Er: registered parking space
H: home
K: movement path
L: parking frame line
Lf: front end
Pc: estimated wheel stop position
Pr: current position
Pt: target parking position
Q: reference point
R: recognition object
T1: assistance limit driving force
T2: contact preparation driving force
V1: assistance limit speed
V2: contact preparation speed
W: wheel

## Claims

1. A parking assistance system that includes a vehicle control unit configured to control a driving force and a braking force acting on a wheel to perform vehicle control for moving a vehicle including the wheel to a parking space, the parking assistance system further comprising:
a wheel stop position estimation unit configured to estimate a position of a wheel stop in the parking space; and
an error amount estimation unit configured to estimate an error amount of a position recognition system of the vehicle, wherein
based on an estimated wheel stop position which is the position of the wheel stop estimated by the wheel stop position estimation unit, the vehicle control unit sets a contact assumption area, which is an area where the wheel is allowed to come into contact with the wheel stop, on a side of the vehicle relative to the estimated wheel stop position, and performs pre-stop control for causing the vehicle to travel at a preset contact preparation speed in the contact assumption area, and
the vehicle control unit reduces the contact assumption area as an estimated error amount, which is the error amount estimated by the error amount estimation unit, decreases.

2. The parking assistance system according to claim 1, further comprising:
an image recognition unit configured to perform image recognition on an image acquired by imaging a surrounding of the vehicle, wherein
the vehicle control unit performs calculation processing of calculating a size of the area where the wheel is allowed to come into contact with the wheel stop based on a recognition object recognized by the image recognition unit and a predetermined positional relationship between the recognition object and the wheel stop, and
the vehicle control unit sets a size of the contact assumption area based on a size obtained by combining a result of the calculation processing and the estimated error amount.

3. The parking assistance system according to claim 1 or 2, further comprising:
the image recognition unit configured to perform the image recognition on the image acquired by imaging the surrounding of the vehicle,
a travel distance calculation unit configured to calculate a travel distance of the vehicle, and
an object determination unit configured to determine a positional relationship between the recognition object and the vehicle based on a result of the image recognition performed by the image recognition unit, wherein
the error amount estimation unit calculates the estimated error amount by integrating errors of the image recognition unit, the travel distance calculation unit, and the object determination unit.

4. The parking assistance system according to claim 1 or 2, wherein
the vehicle control unit limits the driving force acting on the wheel to a preset contact preparation driving force or less in the contact assumption area.
